(19) **Europäisches Patentamt European Patent Office Office européen des brevets**

(11) **EP 1 692 024 B1**

(12) **FASCICULE DE BREVET EUROPEEN**

(45) Date de publication et mention
de la délivrance du brevet:
**03.06.2009 Bulletin 2009/23**

(51) Int Cl.:
**B60S 5/04** (2006.01)

(21) Numéro de dépôt: **04805500.8**

(22) Date de dépôt: **22.11.2004**

(86) Numéro de dépôt international:
**PCT/FR2004/002969**

(87) Numéro de publication internationale:
**WO 2005/066002 (21.07.2005 Gazette 2005/29)**

(54) **PROCEDE DE GONFLAGE DE PNEUMATIQUE ET MACHINE POUR LA MISE EN OEUVRE DU PROCEDE**

REIFENAUFBLASVERFAHREN UND MASCHINE ZUR DURCHFÜHRUNG DES VERFAHRENS

TYRE-INFLATION METHOD AND MACHINE FOR CARRYING OUT SAID METHOD

(84) Etats contractants désignés:
**AT BE BG CH CY CZ DE DK EE ES FI FR GB GR HU IE IS IT LI LU MC NL PL PT RO SE SI SK TR**

(30) Priorité: **08.12.2003 FR 0314330**

(43) Date de publication de la demande:
**23.08.2006 Bulletin 2006/34**

(73) Titulaires:
• **Société de Technologie Michelin
63000 Clermont-Ferrand (FR)**
• **Michelin Recherche et Technique S.A.
1763 Granges-Paccot (CH)**

(72) Inventeur: **CORNIOT, Philippe
F-63530 Enval (FR)**

(74) Mandataire: **Laget, Jean-Loup
Brema-Loyer
161, rue de Courcelles
75017 Paris (FR)**

(56) Documents cités:
**EP-A- 0 791 488          WO-A-94/04398
US-A- 5 035 274          US-A1- 2003 164 758
US-B1- 6 218 937         US-B1- 6 499 343**

**Description**

La présente invention concerne un procédé pour gonfler un pneumatique d'une roue de véhicule à l'aide d'une machine de gonflage commandée par une unité programmable de gestion de données, ainsi qu'un dispositif et une machine pour la mise en oeuvre du procédé.

Pour obtenir les meilleures performances, qui résultent usuellement d'un compromis entre usure, adhérence et confort, et qui conditionnent une bonne tenue de route, un bon freinage, une bonne suspension, un faible niveau de bruit de roulement, un bon amortissement des vibrations..., l'ensemble véhicule/roue/pneu doit travailler à des pressions ayant des valeurs très proches des valeurs de consigne de pression préconisées pour le gonflage des pneumatiques. Ces valeurs de consigne de pression sont généralement fixées par un accord entre les constructeurs de véhicules automobiles et les fabricants de pneumatiques pour correspondre à un ensemble donné véhicule/roue/pneu pour des conditions données de masse, vitesse et stabilité, et pour des pneus froids, c'est-à-dire sans échauffement dû au roulage. Un roulage continu avec des pneumatiques sous-gonflés peut conduire à une diminution des performances des pneumatiques, telles que la résistance au roulement, l'endurance, le confort, etc... Inversement, des pneumatiques sur-gonflés peuvent conduire à une dégradation de l'adhérence des pneumatiques et du confort du véhicule et à une accélération de l'usure des pneumatiques. Comme un mauvais gonflage des pneumatiques peut conduire à des conséquences non négligeables, les constructeurs automobiles et les fabricants de pneumatiques recommandent généralement que la pression des pneumatiques soit maintenue dans une plage étroite de pression, généralement inférieure à 10 pour cent de la valeur de consigne préconisée, soit, pour une valeur de consigne préconisée de 2 bars, une différence maximum de pression de 200 millibars par rapport à ladite valeur de consigne.

Lors d'une opération de gonflage à l'aide d'une machine de gonflage installée en libre service dans une station de distribution d'essence ou un supermarché, les conducteurs ne tiennent en général pas compte de l'état des pneumatiques de leur véhicule ou, quand ils veulent en tenir compte, ils rencontrent des difficultés. En effet, des sondages ont montré que :

- Les conducteurs ajustent rarement à froid la pression des pneumatiques de leur véhicule. Généralement, ils parcourent plusieurs kilomètres avant de s'arrêter à une station de gonflage et ils ne savent pas s'il est nécessaire de tenir compte d'un échauffement des pneumatiques et, le cas échéant, dans quelle proportion il doit en être tenu compte.
- Il arrive aux conducteurs de contrôler les pressions après ou pendant un long trajet.
- Les conducteurs ne peuvent pas tenir compte des différences de température entre des pneus qui ont été exposés au soleil et des pneus qui sont restés à l'ombre, et/ou tenir compte des différences d'échauffement entre les pneumatiques appartenant aux essieux avant et arrière.
- Pendant les périodes froides (automne, hiver et printemps) les conducteurs ajustent la pression des pneumatiques de leur véhicule plutôt en milieu ou en fin de journée, donc à un moment où la température ambiante est usuellement plus élevée qu'en début de journée.
- Il arrive souvent que les conducteurs n'ajustent la pression des pneumatiques de leur véhicule qu'une fois par an, à l'occasion d'un départ en vacances de longue durée, généralement en été, donc à une période où la température ambiante est relativement élevée.

Dans de nombreux cas, il arrive donc que le gonflage des pneumatiques soit effectué à un moment où les pneumatiques sont dans un état chaud. Dans ce cas, si la pression des pneumatiques est ajustée à la valeur de consigne préconisée par le constructeur du véhicule automobile, les pneumatiques pourront être sous-gonflés. Il peut même arriver que, si les pneumatiques ont été fortement échauffés, le conducteur constate que la pression est plus élevée que la valeur de consigne préconisée par le constructeur et que, voyant cela, le conducteur dégonfle les pneumatiques alors qu'ils étaient à la bonne pression ou qu'ils auraient dû être regonflés si la pression avait été mesurée à froid. Dans ce dernier cas, il peut en résulter que les pneus sont ou deviennent nettement sous-gonflés sans que le conducteur le sache, ce qui peut avoir de multiples conséquences, telles que celles indiquées plus haut.

Lorsque les conducteurs font appel à un professionnel dans une station service pour le gonflage des pneumatiques de leur véhicule, le plus souvent le professionnel applique une solution radicale consistant à gonfler systématiquement les pneumatiques en ajoutant 0,3 à 0,4 bar, ou plus, à la valeur de consigne préconisée par le constructeur. Une telle solution n'est pas non plus satisfaisante car elle peut conduire à un gonflage exagéré des pneumatiques et à des performances dégradées, notamment du point de vue de l'usure des pneumatiques et du confort du véhicule.

On connaît des véhicules automobiles dont les roues sont munies d'un système de surveillance de pression, couramment appelé système TPMS (abréviation de l'expression anglaise Tyre Pressure Monitoring System signifiant Système de surveillance de la pression des pneus). Les systèmes TPMS comprennent généralement un capteur de pression et/ou un détecteur de variation de pression, ainsi qu'un module de gestion susceptible de recevoir et de traiter des informations fournies par le capteur de pression et/ou le détecteur de variation de pression et un module émetteur pour transmettre à un récepteur indépendant de la roue les informations analysées et traitées par le module de gestion (voir notamment les demandes internationales de brevet publiées sous les n° WO 02/34551, WO 02/34552 et WO 02/34553). Selon le cas, les informations transmises au récepteur sont utilisées pour avertir le conducteur d'une automobile d'une anomalie, comme par exemple une pression insuffisante à l'intérieur de la cavité du pneumatique, une crevaison, une perte rapide de pression, un éclatement, etc.

Même avec les véhicules équipés d'un système TPMS, le gonflage correct des pneumatiques est important. En effet, le seuil de déclenchement de l'alarme des systèmes TPMS n'est usuellement pas très éloigné de la valeur de consigne préconisée par le constructeur pour la pression de gonflage, par exemple de -300 à -400 millibars. Il en résulte que si un conducteur réajuste la pression des pneumatiques de son véhicule dans l'après-midi, par exemple après son travail, alors que la température ambiante est d'environ 20°C, et après avoir roulé quelque peu, entraînant ainsi un échauffement des pneumatiques d'au moins 10°C en plus de la température ambiante, soit au total une température des pneumatiques d'au moins 30°C, le lendemain matin, à froid, si la température ambiante est par exemple de 0°C, la pression des pneumatiques aura facilement baissé d'au moins 300 millibars en dessous de la pression ajustée par le conducteur lors du gonflage effectué dans l'après-midi de la veille, c'est-à-dire que les pneumatiques pourront être à une pression très proche du seuil de déclenchement de l'alarme. L'alarme peut donc se déclencher et, si cela se produit, le conducteur réajustera la pression des pneumatiques selon son habitude, le plus souvent dans l'après-midi après son travail, de sorte que le même phénomène pourra éventuellement se reproduire le lendemain matin et les jours suivants sans que le conducteur comprennent le phénomène. Il en résulte chez le conducteur une certaine incompréhension et/ou lassitude. En revanche, si le conducteur a fait réajuster la pression des pneumatiques par un professionnel qui a trop largement sur-gonflé les pneumatiques, le système TPMS n'émet pas nécessairement une alarme, mais cette situation n'est pas non plus satisfaisante, car elle peut amener les pneumatiques à fonctionner en dehors des conditions pour lesquelles ils ont été prévus.

Le document EP 0 791 488 décrit un procédé selon le préambule de la revendication 1, dans lequel la valeur de la pression de l'air à l'intérieur du pneumatique est ajustée à une valeur de consigne corrigée en fonction de la valeur mesurée de la température du pneumatique.

La présente invention a donc pour but de résoudre les problèmes susindiqués en fournissant un procédé permettant de gonfler le plus correctement possible un pneumatique d'une roue de véhicule même si le pneumatique est chaud ou a roulé sur un long trajet avant que sa pression soit réajustée, et cela quel que soit le moment de la journée où le réajustement de la pression est effectué.

A cet effet, la présente invention a pour objet un procédé selon la revendication 1.

Dans un mode de réalisation de la présente invention, la valeur moyenne de la température ambiante peut être calculée sur une période de 24 heures. A titre de variante, la valeur moyenne de la température ambiante peut être calculée sur une période 12 heures.

De préférence, à l'étape c), ladite au moins une donnée permettant de définir une valeur de consigne pour la pression de gonflage est fournie automatiquement par la consultation automatique dudit support d'information effectuée à l'étape b).

En variante ou pour les véhicules qui ne sont pas équipé d'un système TPMS, à l'étape c) ladite au moins une donnée permettant de définir une valeur de consigne pour la pression de gonflage est fournie par un utilisateur de la machine de gonflage par entrée de ladite au moins une donnée au moyen d'un clavier.

Le procédé selon l'invention peut en outre comporter une étape consistant à mesurer la pression atmosphérique sur le site de la machine de gonflage, et à l'étape h), la valeur de consigne corrigée $P'_{cc}$, en valeur relative, est calculée d'après la formule :

$$P'_{cc} = (P'_c + P_{atm}) . \left[ (t_p + 273)/(t_{ref} + 273) \right] - P_{atm}$$

dans laquelle $P'_c$ est ladite valeur de consigne, en valeur relative, pour la pression de gonflage, $P_{atm}$ est la valeur de la pression atmosphérique mesurée, $t_p$ et $t_{ref}$ sont ladite température du pneumatique et ladite température variable de référence en degré C.

Le procédé selon l'invention peut en outre comporter une étape consistant à fournir à l'unité programmable de gestion de données au moins une information supplémentaire choisie dans le groupe comprenant une information indiquant le modèle du véhicule auquel, appartient la roue dont le pneumatique est à gonfler, une information indiquant si ledit pneumatique à gonfler appartient à un essieu avant ou arrière, une information indiquant un état de charge du véhicule et une information indiquant sur quel type de voie l'utilisateur à l'intention de rouler, et ladite au moins une information supplémentaire est prise en compte, en combinaison avec ladite donnée fournie à l'étape c), pour définir la valeur de consigne ($P_c$) pour la pression de gonflage à utiliser pour le calcul de la valeur de consigne corrigée.

Le procédé selon l'invention peut en outre comporter, après l'étape e) les étapes consistant :

k) à répéter l'étape b),

l) à vérifier si la température du pneumatique fournie par le capteur de température à l'étape k) a changé de plus d'une quantité prédéfinie par rapport à la température du pneumatique fournie par le capteur de température à l'étape b),

m) si le résultat de la vérification effectuée à l'étape 1) est positif, à répéter les étapes h), d) et e), en utilisant dans la formule de calcul de la valeur de consigne corrigée la valeur de la température du pneumatique fournie par le capteur de température à l'étape k), sinon à émettre un message de fin de gonflage.

Dans un mode de réalisation de l'invention, à l'étape d), la valeur de la pression à l'intérieur du pneumatique est mesurée par un premier capteur de pression situé dans la machine de gonflage.

Dans le cas où le support d'information porte un second capteur de pression apte à fournir la valeur de la pression de l'air à l'intérieur du pneumatique, le procédé selon l'invention peut en outre présenter les caractéristiques suivantes :

- à l'étape b), la valeur de la pression fournie par le second capteur de pression est aussi transmise à l'unité programmable de gestion de données,
- à l'étape d) la valeur de la pression de l'air à l'intérieur du pneumatique, mesurée par le premier capteur de pression, est comparée à la valeur de la pression fournie par le second capteur de pression et un signal d'erreur est produit et compté si les valeurs de pression fournies par les premier et second capteurs diffèrent de plus d'une quantité prédéfinie.

Dans ce cas, un message d'erreur peut être émis si le nombre des signaux d'erreurs comptés atteint un nombre prédéfini au cours d'opérations successives de gonflage, et la machine de gonflage est mise hors service.

Un dispositif pour gonfler un pneumatique d'une roue de véhicule comprend:

a) au moins un support d'information consultable automatiquement, porté par au moins un des composants de la roue dont le pneumatique est à gonfler, ledit support d'information portant un premier capteur de température apte à fournir la valeur de la température du pneumatique de la roue, et étant apte. à fournir, quand il est consulté, au moins une donnée utilisable pour gonfler le pneumatique,

b) un moyen de consultation et de transmission apte à consulter automatiquement ledit support d'information et à transmettre automatiquement ladite au moins une donnée à une unité programmable de gestion de données,

c) ladite unité programmable de gestion de données,

d) un second capteur de température pour mesurer la température ambiante sur le site de la machine de gonflage,

e) des moyens de calcul inclus dans ladite unité programmable de gestion de données pour calculer une valeur de consigne corrigée pour la pression de gonflage du pneumatique à gonfler, sur la base d'une valeur de consigne pour la pression de gonflage définie à partir d'au moins une donnée fournie à ladite unité programmable de gestion de données, et tenant compte de la valeur de la température du pneumatique fournie par le premier capteur de température, l'unité programmable de gestion de données étant programmée pour que lesdits moyens de calcul calculent une valeur moyenne de ladite température ambiante sur une période de temps écoulée prédéfinie, et calculent la valeur de consigne corrigée $P_{cc}$ d'après la formule :

$$P_{cc} = P_c \cdot \frac{T_p}{T_{ref}}$$

dans laquelle $P_c$ est ladite valeur de consigne pour la pression de gonflage, Tp est la température du pneumatique fournie par le premier capteur de température et $T_{ref}$ est une température variable de référence qui est choisie comme étant la température la plus basse parmi la température ambiante instantanée mesurée sur le site de la machine de gonflage par le second capteur de température et ladite valeur moyenne calculée de la température ambiante, les pressions $P_c$ et $P_{cc}$ étant en valeur absolue et les températures Tp et $T_{ref}$ étant en degré K,

f) au moins un moyen pour mesurer la valeur de la pression de l'air à l'intérieur dudit pneumatique à gonfler et pour fournir la valeur de la pression mesurée à ladite unité programmable de gestion de données,

g) une machine de gonflage, commandée par ladite unité programmable de gestion de données pour ajuster la valeur de la pression de l'air à l'intérieur du pneumatique à la valeur de consigne corrigée ($P_{cc}$) calculée par lesdits moyens de calcul.

Dans un mode de réalisation, le support d'information comporte une mémoire contenant, à titre de ladite au moins une donnée, la valeur de consigne pour la pression de gonflage.

Dans un autre mode de réalisation, le support d'information comporte une mémoire contenant, à titre de ladite au moins une donnée, une donnée d'identification relative au pneumatique à gonfler.

Dans ce cas, l'unité programmable de gestion de données comporte une mémoire contenant une table de correspondance comprenant les données d'identification de tous les pneumatiques susceptibles d'être gonflés au moyen de la machine de gonflage et, pour chaque donnée d'identification, plusieurs valeurs de consigne pour la pression de gonflage qui dépendent elles-mêmes d'au moins une information supplémentaire choisie dans le groupe comprenant une information indiquant le modèle de véhicule auquel appartient la roue dont le pneumatique est à gonfler, une information indiquant si ledit pneumatique appartient à un essieu avant ou arrière, une information indiquant un état de charge du véhicule et une information indiquant sur quel type de voie l'utilisateur à l'intention de rouler.

De préférence, un clavier est prévu pour entrer ladite au moins une information supplémentaire dans ladite unité programmable de gestion de données, et cette dernière est programmée pour sélectionner comme valeur de consigne dans la table de correspondance la valeur de consigne correspondant à ladite donnée d'identification et à ladite au moins une information supplémentaire entrée au moyen du clavier.

Dans un mode de réalisation, le dispositif peut comprendre, à titre dudit moyen pour mesurer la valeur de la pression de l'air à l'intérieur du pneumatique, un premier capteur de pression qui est situé dans la machine de gonflage et qui est en communication, du point de vue fluidique, avec ledit pneumatique quand la machine de gonflage est raccordée à une valve de gonflage de la roue.

En variante ou en plus de la caractéristique précédente, le dispositif peut comprendre, à titre dudit moyen pour mesurer la valeur de la pression de l'air à l'intérieur du pneumatique, un second capteur de pression qui est porté par ledit support d'information, et ledit support d'information est apte à fournir, quand il est consulté, la valeur de la pression mesurée par le second capteur de pression à ladite unité programmable de gestion de données.

Quand les premier et second capteurs de pression sont prévus à titre de moyen pour mesurer la valeur de la pression de l'air à l'intérieur du pneumatique, l'unité programmable de gestion de données peut être programmée pour comparer les valeurs de pression fournies par les premier et second capteurs de pression et pour produire et compter un signal d'erreur si lesdites valeurs de pression diffèrent de plus d'une quantité prédéfinie.

Dans ce cas, l'unité programmable de gestion de données peut être programmée pour émettre un message d'erreur si le nombre des signaux d'erreur comptés au cours d'opérations successives de gonflage atteint un nombre prédéfini, et pour mettre la machine de gonflage hors service.

Le dispositif peut en outre comprendre un troisième capteur de pression installé pour mesurer la pression atmosphérique sur le site de la machine de gonflage, et l'unité programmable de gestion de données est programmée pour calculer la valeur de consigne corrigée $P'_{cc}$, en valeur relative, d'après la formule :

$$P'_{cc} = (P'_c + P_{atm}) \cdot \left[ (t_p + 273)/(t_{ref} + 273) \right] - P_{atm}$$

dans laquelle $P'_c$ est ladite valeur de consigne, en valeur relative, pour la pression de gonflage, $P_{atm}$ est la valeur de la pression atmosphérique mesurée par le troisième capteur de pression (38) , $t_p$ et $t_{ref}$ sont respectivement ladite température du pneumatique et ladite température variable de référence en degré C.

L'invention a également pour objet une machine de gonflage pour des roues de véhicule selon la revendication 12.

La machine de gonflage peut en outre présenter une ou plusieurs des caractéristiques additionnelles déjà indiquées plus haut à propos du dispositif de gonflage.

D'autres caractéristiques et avantages de l'invention apparaîtront au cours de la description suivante d'un mode de réalisation de l'invention donné à titre d'exemple en référence aux dessins annexés sur lesquels :

- la figure 1 illustre une représentation schématique d'un dispositif de gonflage selon un mode de réalisation de l'invention ;
- la figure 2 est une vue en coupe transversale montrant une partie d'une roue, dont les composants sont munis de supports d'information ;
- la figure 3 illustre une représentation schématique d'un support d'information utilisable avec l'un quelconque des composants de la roue montrée sur la figure 2 et utilisable avec le dispositif de gonflage représenté sur la figure 1 ;
- la figure 4 est une vue semblable à la figure 3, illustrant de manière schématique un support d'information évolué.

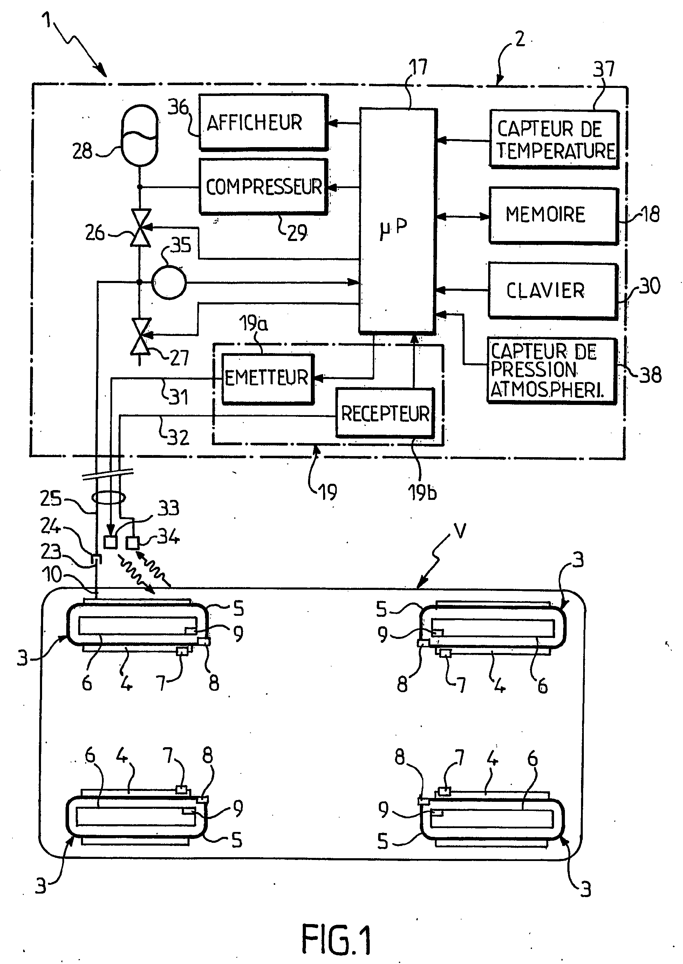

En se reportant tout d'abord à la figure 1, on peut voir un dispositif de gonflage 1 utilisable pour la mise en oeuvre du procédé de l'invention. Le dispositif de gonflage 1 comprend une machine de gonflage 2, apte à gonfler les roues 3 d'un véhicule automobile V. Chaque roue 3 comprend une jante 4, un pneumatique 5 et éventuellement un appui de sécurité 6 destiné à permettre un roulage temporaire du véhicule V lors d'une chute de pression partielle ou totale à l'intérieur de la cavité du pneumatique 5 de la roue.

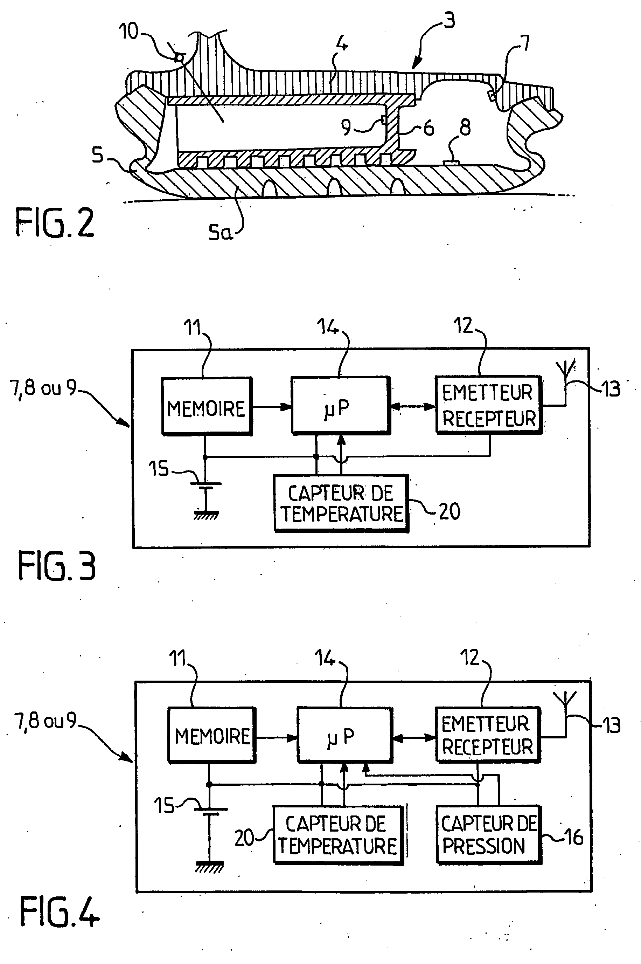

La figure 2 illustre, en coupe transversale, une partie d'une roue 3 de type connu, dans un état de roulage à plat, c'est-à-dire dans un état dégonflé du pneumatique 5.

Dans le mode de réalisation représenté ici, chacun des composants 4, 5 et 6 de la roue 3 comporte, de façon connue en soi, un support d'information 7, 8 ou 9, respectivement. Cependant, ici, au moins un des supports d'information 7, 8 et 9 porte ou contient au moins une donnée utilisable pour gonfler la roue 3, en particulier des données pour effectuer un réglage préalable de la machine de gonflage de pneus avant une opération de gonflage de la roue 3.

La figure 2 montre un exemple connu d'implantation des supports d'information 7, 8 et 9 dans la roue 3. Dans l'exemple représenté dans la figure 2, les supports d'information 7, 8 et 9 sont disposés contre une paroi du composant correspondant et maintenus par exemple par collage. Par exemple, le support d'information 8 associé au pneumatique 5 est disposé contre la face intérieure de la bande de roulement 5a du pneumatique 5 et fixé à la bande de roulement par collage. Selon un autre exemple (non montré), les supports d'information 7, 8 et 9 peuvent être intégrés ou noyés, de façon connue, dans l'une ou l'autre des parois du composant correspondant 4, 5 ou 6. Sur la figure 2, on a également montré, de façon très schématique, une valve de gonflage 10 en communication fluidique avec la cavité interne du pneumatique 5.

Les supports d'information 7, 8 et 9 peuvent prendre une multiplicité de formes, comme par exemple une étiquette électronique telle un transpondeur, un élément de mémoire de type ROM ou RAM, etc.

La figure 3 montre, de manière schématique, un exemple d'étiquette électronique susceptible d'être utilisée pour former le support d'information 7, 8 ou 9. Comme montré dans la figure 3, l'étiquette électronique comporte une mémoire 11 contenant la ou les données devant être transmises à la machine de gonflage 2, un émetteur/récepteur 12 apte à établir, via une éventuelle antenne 13, une communication bidirectionnelle sans fil avec ladite machine de gonflage 2, et un microprocesseur 14 apte à gérer le fonctionnement de la mémoire 11 et de la section émettrice de l'émetteur/réception 12 quand la section réceptrice de celui-ci reçoit un signal d'interrogation ou de stimulation en provenance de la machine de gonflage 2. Une pile ou batterie 15 peut être prévue pour fournir l'énergie électrique nécessaire au fonctionnement de la mémoire 11, de l'émetteur/récepteur 12 et du microprocesseur 14. Toutefois, la présence de la batterie n'est pas absolument nécessaire lorsque l'on utilise un simple transpondeur et une mémoire fixe contenant un code unique, car dans ce cas, l'énergie nécessaire pour le fonctionnement de l'étiquette électronique peut être prélevée sur le signal d'interrogation ou de stimulation reçu par l'étiquette électronique en provenance de la machine de gonflage 2.

Au moins une des étiquettes électroniques 7, 8 et 9, par exemple l'étiquette 7 associée à la jante 4 ou l'étiquette 8 associée au pneumatique 5, comprend un capteur de température 20 apte à mesurer la température du pneumatique. Dans le présent contexte, on entend par température du pneumatique, la température de l'air dans la cavité du pneumatique 5. De préférence, on utilise comme capteur de température 20, un capteur à faible consommation de courant, comme par exemple un thermocouple, afin d'économiser l'énergie de la pile ou batterie 15.

La figure 4 montre, de façon schématique, une étiquette électronique plus évoluée que celle de la figure 3, qui est également utilisable pour former l'un ou l'autre des supports d'information 7, 8 ou 9. L'étiquette de la figure 4 est utilisable dans le cas où elle doit être aussi capable de fournir une indication sur la valeur de la pression de l'air à l'intérieur de la cavité du pneumatique 5 de la roue 3, comme pour un véhicule équipé d'un système TPMS. Dans l'étiquette électronique de la figure 4, les éléments qui sont identiques ou qui jouent le même rôle que ceux de l'étiquette électronique de la figure 3 sont désignés par les mêmes numéros de référence et ne seront pas décrits à nouveau en détail.

L'étiquette électronique de la figure 4 diffère de celle de la figure 3 en ce qu'elle comprend en outre un capteur de pression 16 apte à mesurer la pression de l'air dans la cavité du pneumatique 5. De façon connue, on utilise de préférence comme capteur pression 16 un capteur ne nécessitant pas d'alimentation comme par exemple un capteur de type piézo-électrique, afin d'économiser l'énergie de la pile ou batterie 15. Ceci permet d'augmenter la durée de vie de la pile ou batterie 15 de telle sorte qu'elle puisse correspondre, dans la mesure du possible, à celle de la jante 4 ou du pneumatique 5 de la roue 3. Ainsi, en plus de sa fonction de support d'information pour la mise en oeuvre du procédé de gonflage selon l'invention, l'étiquette électronique peut aussi être utilisée avantageusement dans le cas où le véhicule est équipé d'un système TPMS permettant la surveillance de la pression des pneumatiques à l'arrêt comme pendant le roulage.

Revenant à la figure 1, on peut voir que la machine de gonflage 2 comporte une unité programmable de gestion de données 17, par exemple un microprocesseur, et une mémoire 18, qui peut être une mémoire interne du microprocesseur 17 ou une mémoire externe connectée au microprocesseur. Le microprocesseur 17 est conçu, d'une façon qui sera décrite en détail plus loin, pour régler la machine de gonflage 2, avant chaque opération de gonflage d'un pneumatique, sur la base de données qui sont introduites dans la mémoire 18 et qui sont relatives à la température du pneumatique 5 de la roue 3 à gonfler, au type dudit pneumatique, au modèle du véhicule dont les roues sont équipées dudit pneumatique, et éventuellement sur la base d'autres informations supplémentaires, comme par exemple une information indiquant si le pneumatique à gonfler appartient à un essieu avant ou arrière, ou des informations relatives aux conditions de roulage actuelles ou futures du véhicule (état de charge du véhicule, vitesse du véhicule, c'est-à-dire évolution du véhicule en ville, sur route ou sur autoroute). Le microprocesseur 17 est également conçu pour gérer ensuite, comme on le verra plus loin, le fonctionnement des organes fonctionnels de la machine de gonflage 2 pendant les opérations de gonflage, sur la base d'un programme stocké dans la mémoire 18.

Au moins une partie des données et/ou informations susmentionnées permettant le réglage préalable de la machine 2 en vue de l'adapter à chaque roue devant être gonflée pourra être saisie manuellement par un utilisateur de la machine 2 à l'aide d'un clavier 30, en vue d'être entrées dans la mémoire 18.

Toutefois, étant donné que, dans le procédé de gonflage selon l'invention, la machine 2 doit être en mesure de recevoir l'information relative à la température du pneumatique 5 à gonfler, température qui est mesurée par le capteur de température porté l'une des étiquettes électroniques 7, 8 ou 9 de la roue 3, il est particulièrement avantageux qu'au moins une partie des données susmentionnées nécessaires au réglage de la machine de gonflage 2, comme par exemple le type du pneumatique ou une valeur de consigne pour la pression de gonflage de ce type de pneumatique, soit emmagasinée dans la mémoire 11 de l'une ou l'autre des étiquettes électroniques 7, 8 et 9, afin de pouvoir être transmise à la machine de gonflage 2 en plus de la valeur de la température du pneumatique 5 à gonfler.

La machine 2 comprend donc, en plus du clavier susmentionné 30, au moins un émetteur/récepteur 19 qui est relié au microprocesseur 17 par une liaison appropriée 21, par exemple une liaison série de type RS 232 ou une liaison de type CAN, BLUE TOOTH ou autre réseau de terrain. L'émetteur/récepteur 19 est conçu pour pouvoir établir une communication bidirectionnelle sans fil avec l'émetteur/récepteur 12 de l'étiquette électronique 7, 8 ou 9 de la figure 3 ou 4.

Par exemple, la section émettrice 19a de l'émetteur/récepteur 19 peut être conçue pour émettre un signal d'interrogation ou de stimulation à une fréquence 125 Khz pendant une durée de deux à trois secondes chaque fois qu'une roue 3 est approchée de la machine 2, comme on le verra en détail plus loin. Quand la section réceptrice de l'émetteur/récepteur 12 de l'étiquette électronique 7, 8 ou 9 reçoit le signal d'interrogation ou de stimulation émis par l'émetteur/récepteur 19, elle excite le microprocesseur 14 qui va chercher la ou les données contenues dans la mémoire 11 et transmet lesdites données, via la section émettrice de l'émetteur/récepteur. 12 vers la section réceptrice 19b de l'émetteur/récepteur 19, par exemple sous la forme d'un signal codé à une fréquence de 433 Mhz ou 315 Mhz.

Dans le cas où chacun des composants de la roue 3 porte une étiquette électronique, c'est-à-dire dans le cas où la roue 3 comporte plusieurs étiquettes électroniques comme les étiquettes 7, 8 et 9, le signal codé de réponse peut être calé sur une fréquence particulière, proche de 433 Mhz ou 315 Mhz, mais différente pour chaque étiquette. Du côté de la machine 2, l'émetteur/récepteur 19 comporte une section réceptrice 19b à large bande, apte à recevoir toutes les fréquences susceptibles d'être émises par les étiquettes électroniques 7, 8 et 9. Même si un seul des composants de la roue 3 comporte une étiquette électronique, par exemple la jante 4 avec son étiquette électronique 7, il peut néanmoins être avantageux que le signal codé de réponse soit calé sur une première fréquence particulière, par exemple supérieure à 433 Mhz, pour une roue appartenant à un essieu avant et sur une seconde fréquence particulière, par exemple inférieure à 433 Mhz, pour une roue appartenant à un essieu arrière. Dans ce dernier cas, la machine de gonflage 2 sera en mesure de déterminer si le pneumatique à gonfler appartient à une roue avant ou arrière simplement en discriminant la fréquence du signal codé de réponse.

De préférence, le signal d'interrogation ou de stimulation émis par la section émettrice de l'émetteur/réception 19 et le ou les signaux codés de réponse envoyés par la section émettrice de l'émetteur/récepteur 12 de la ou des étiquettes électroniques 7, 8 ou 9 sont synchronisés, c'est-à-dire que les signaux codés de réponse sont émis dans une fenêtre temporelle de durée prédéfinie après l'émission du signal d'interrogation ou de stimulation. Ainsi, le microprocesseur 17 de la machine 2 est capable de rejeter tout signal parasite non reçu dans la fenêtre temporelle.

Les signaux codés de réponse reçus par l'émetteur/récepteur 19 et transmis au microprocesseur 17 de la machine 2 sont stockés dans la mémoire 18.

Dans la figure 1, l'une des roues 3 du véhicule V est représentée avec une valve 10 exagérément allongée pour la commodité du dessin. La valve 10 comporte un raccord mâle 23 raccordé à un raccord femelle 24 à une extrémité d'un tuyau souple 25 d'alimentation en air comprimé provenant de la machine de gonflage 2.

A l'intérieur de la machine de gonflage 2, l'autre extrémité du tuyau souple 25 est raccordée d'une part à la sortie d'une électrovalve de gonflage 26 et, d'autre part, à l'entrée d'une électrovalve de dégonflage 27 dont la sortie est à l'atmosphère. L'entrée de l'électrovalve de gonflage 26 est elle-même reliée d'une part à un accumulateur de pression 28 et, d'autre part, à la sortie d'un compresseur d'un groupe motocompresseur 29. A l'accumulateur de pression 28 peut être associé un capteur de pression (non montré) dont le signal de sortie est envoyé au microprocesseur 17. Dans ce cas, un programme contenu dans la mémoire 18 du microprocesseur 17 peut être prévu pour comparer la valeur de la pression dans l'accumulateur de pression 28, mesurée par le capteur de pression susmentionné, à deux valeurs de seuil, respectivement inférieure et supérieure, afin de mettre en marche le groupe motocompresseur 29 quand la valeur mesurée de la pression tombe au-dessous de la valeur de seuil inférieure, et pour arrêter le groupe motocompresseur 29 quand la valeur mesurée de la pression atteint la valeur de seuil supérieure.

A titre de variante, à la place du capteur de pression susmentionné, il est possible d'associer à l'accumulateur de pression 28 un pressostat à deux seuils de pression, qui met en marche le groupe motocompresseur 29 lorsque la pression dans l'accumulateur de pression 28 tombe au-dessous d'une valeur de seuil inférieure, et arrête ledit groupe motocompresseur quand la pression dans l'accumulateur 28 atteint une valeur de seuil supérieure.

Comme indiqué plus haut, la mémoire 11 de l'étiquette électronique associée à la jante 4 ou au pneumatique 5 peut contenir une donnée permettant de définir une valeur de consigne pour la pression de gonflage du pneumatique 5 de la roue 3 correspondante. Cette donnée peut être la valeur de consigne elle-même. Toutefois, dans le cas où la mémoire 18 contient une table de correspondance, il n'est pas absolument indispensable que la mémoire 11 de l'étiquette électronique 7 ou 8 associée à la jante 4 ou pneumatique 5 contienne une valeur de consigne pour la pression de gonflage du pneumatique correspondant. En effet, dans ce cas, il suffit que la mémoire 11 contienne une donnée d'identification, par exemple le type du pneumatique, et que la table de correspondance contenue dans la mémoire 11 comprenne, pour chaque donnée d'identification, une valeur de consigne pour la pression de gonflage du pneumatique 5 associé à la jante 4 qui a été identifié au moyen de la donnée d'identification contenue dans la mémoire 11 de l'étiquette électronique 7 ou 8 correspondante. Les valeurs de consigne pour la pression de gonflage peuvent être, comme indiquées plus haut, les valeurs définies ou préconisées par les constructeurs automobiles, en accord avec les fabricants de pneumatiques, pour des ensembles donnés véhicule/roue/pneumatique, pour des pneumatiques froids, c'est-à-dire sans échauffement dû au roulage, et pour des conditions données de roulage, notamment l'état de charge et la vitesse du véhicule.

De préférence, la section émettrice 19a et la section réceptrice 19b de l'émetteur/récepteur 19 de la machine de gonflage 2 sont reliées respectivement par des câbles souples 31 et 32 à des antennes 33 et 34 situées à proximité du raccord femelle 24 du tuyau souple 25. Les câbles 31 et 32 peuvent être liées ou intégrés au tuyau souple 25, au moins dans sa partie qui se trouve à l'extérieur de la machine de gonflage 2, afin de ne former qu'un seul élément allongé flexible avec ledit tuyau. Dans ces conditions, en utilisant des émetteurs/récepteurs 12 et 19 à faible portée, par exemple inférieur à 1 mètre, on peut faire en sorte que l'émetteur/récepteur 19 de la machine de gonflage recevra uniquement la ou les données contenues dans les étiquettes 7, 8 et 9 des composants 4, 5 et 6 de la roue 3 dont la valve 10 est raccordée au tuyau souple 25.

La machine de gonflage 2 peut comporter en outre de façon classique un capteur de pression 35 raccordé du point de vue fluidique, au tuyau souple 25. Le capteur de pression 35 est connecté électriquement au microprocesseur 17. Lorsque le tuyau souple 25 est raccordé à la valve 10 d'une roue 3, le capteur de pression 35 mesure la valeur réelle de la pression dans la cavité intérieure du pneumatique 5 de la roue 3 et fournit au microprocesseur 17 un signal indicatif de ladite valeur réelle de la pression.

De préférence, un afficheur 36 est également connecté au microprocesseur 17, par exemple pour afficher la valeur réelle de la pression mesurée par le capteur de pression 35 ou par le capteur de pression 16 (figure 4) si l'étiquette électronique 7 ou 8 associée à la jante 4 ou au pneumatique 5 de la roue 3 dont la valve 10 est raccordée au tuyau souple 25 comporte un tel capteur de pression.

Pour permettre la mise en oeuvre du procédé de gonflage selon l'invention, la machine de gonflage 2 comprend en outre un capteur de température 37 apte à mesurer la température ambiante sur le site de la machine de gonflage. Le capteur de température 37 est connecté électriquement au microprocesseur 17 de la machine 2 et fournit à celui-ci un signal indicatif de la valeur de la température ambiante sur le site de la machine 2.

Le microprocesseur 17 est programmé pour acquérir à intervalles réguliers, par exemple toutes les heures ou toutes les demi-heures, ou encore plus fréquemment si on le désire, la valeur de la température ambiante fournie par le capteur de température 37.

En outre, le microprocesseur 17 est programmé pour calculer une valeur moyenne de la température ambiante mesurée par le capteur de température 37 sur une période de temps écoulée prédéfinie. Par exemple, le microprocesseur peut calculer de manière glissante la valeur moyenne de la température ambiante sur la période de 12 heures ou de 24 heures précédant chaque acquisition de la valeur de la température ambiante. A titre de variante, le microprocesseur 17 peut être programmée pour calculer ladite valeur moyenne de la température ambiante, sur ladite période de 12 heures ou 24 heures, tous les jours à heure fixe, par exemple à midi et/ou minuit. La valeur de la température ambiante mesurée par le capteur de température 37 et la valeur moyenne de la température ambiante calculée par le microprocesseur sont stockées et périodiquement remises à jour dans la mémoire 18.

Un cycle de gonflage peut être initialisé de différentes manières. Par exemple, le programme contenu dans la mémoire 18 du microprocesseur 17 peut être conçu de telle sorte que, lorsque la machine 2 est en veille, le microprocesseur 17 excite l'émetteur/récepteur 19 à intervalles réguliers, par exemple toutes les 10 secondes, afin que sa section émettrice 19a émette un signal d'interrogation ou de stimulation pendant deux à trois secondes. Si, à ce moment, le tuyau souple 25 a déjà été raccordé à la valve 10 d'une roue 3 et si la section réceptrice 19b de l'émetteur/récepteur 19 reçoit un signal codé de réponse en provenance de l'étiquette électronique 7, 8 ou 9 de ladite roue 3 dans une fenêtre temporelle de durée prédéfinie à la suite de l'émission du signal d'interrogation ou de stimulation, un cycle de gonflage est initialisé.

A titre de variante, la section émettrice 19a de l'émetteur/récepteur 19 pourrait être agencée pour émettre le signal d'interrogation ou de stimulation vers les étiquettes électroniques 7, 8 et 9 seulement en réponse à la réception par le microprocesseur 17 d'un signal indicatif de pression engendré par le capteur de pression 35 lorsque le tuyau souple 25 est raccordé à la valve 10, ou encore, si le pneumatique 5 est complètement dégonflé, en réponse à l'enfoncement d'un bouton poussoir de démarrage (non montré) par un utilisateur de la machine de gonflage 2.

Dans tous les cas, l'initialisation d'une opération de gonflage commence par une opération de réglage de la machine de gonflage 2. Cette opération de réglage consiste à charger dans la mémoire 18 ou dans une autre mémoire de travail du microprocesseur 17, une valeur de consigne pour la pression de gonflage du pneumatique 5 de la roue dont la valve 10 est raccordée au tuyau souple 25. Comme indiqué précédemment, cette valeur de consigne peut être obtenue directement et automatiquement à partir de la mémoire 11 de l'étiquette électronique 7 ou 8, ou elle peut être obtenue à partir d'une table de correspondance contenue dans la mémoire 18, sur la base des données d'identification envoyées au microprocesseur 17 par l'étiquette électronique 7 ou 8. En outre et/ou à titre de variante, la valeur de consigne pour la pression de gonflage peut être introduite manuellement dans la mémoire 18 par l'utilisateur de la machine de gonflage 2 au moyen du clavier 30. Une telle saisie manuelle de la valeur de consigne pour la pression de gonflage peut être rendue nécessaire par exemple lorsque le support d'information 7, 8 ou 9 contenu dans la roue du véhicule ne comporte pas de mémoire 11 ou lorsque la mémoire 11 ne contient pas de valeur de consigne pour la pression ou une donnée permettant de définir ladite valeur de consigne.

A ce stade, d'autres informations peuvent être également fournies au microprocesseur 17, comme par exemple l'information indiquant si le pneumatique appartient à une roue avant ou à une roue arrière, l'état de charge présent ou futur du véhicule, la vitesse envisagée pour le véhicule, c'est-à-dire une information indiquant si le conducteur a l'intention de rouler en ville, sur route ou sur autoroute.

Au moins une partie de ces données ou informations supplémentaires peut être communiquée automatiquement au microprocesseur 17. Par exemple, l'information concernant la roue avant ou la roue arrière peut être déterminée le cas échéant à partir de la fréquence du signal codé de réponse envoyé par l'étiquette électronique 7 ou 8. En variante, cette information peut être fournie par des transpondeurs fixés à des endroits appropriés sur le véhicule V et aptes à réagir aux signaux d'interrogation ou de stimulation émis par la section émettrice 19a de l'émetteur/récepteur 19.

L'information indiquant si le véhicule est faiblement chargé, moyennement chargé ou fortement chargé peut aussi être fournie, via les transpondeurs susmentionnés, par des capteurs de charge ou autres jauges de contraintes incorporés dans les suspensions de roue du véhicule. L'information de vitesse peut aussi être fournie automatiquement au microprocesseur 17, via un transpondeur approprié, dans le cas où le véhicule est équipé d'un ordinateur de bord qui calcule, entre autres, comme cela est usuel, la vitesse moyenne du véhicule pendant le trajet en cours.

Toutefois, en cas de besoin, notamment quand il s'agit d'indiquer à la machine de gonflage 2 quelles seront les conditions futures de roulage, les données ou informations susmentionnées peuvent aussi être introduites manuellement dans la mémoire 18 du microprocesseur 17 par l'utilisateur de la machine 2 au moyen du clavier 30. A cet effet, le clavier 30 peut comporter par exemple, des touches de fonctions préprogrammées, des commutateurs ou des sélecteurs qui, lorsqu'ils sont activés ou positionnés selon le choix de l'utilisateur fournissent les informations désirées au microprocesseur 17.

A partir des données et informations ainsi introduites automatiquement ou manuellement dans la mémoire 18 du microprocesseur 17, celui-ci est en mesure de déterminer, par exemple au moyen d'une table de correspondance, la valeur de consigne préconisée pour la pression de gonflage correspondant à la roue avant ou arrière 3 dont la valve de gonflage 10 raccordée à la machine 2, et tenant éventuellement compte de l'état de charge et de la vitesse actuels ou projetés pour le véhicule.

Le support d'information 7 ou 8 qui porte le capteur de température 20 fournit également au microprocesseur 17 la valeur de la température du pneumatique 5 à gonfler. Ensuite, le microprocesseur 17 calcule une valeur de consigne corrigée pour la pression de gonflage sur la base de la valeur de consigne pour la pression de gonflage qui a été déterminée pour le pneumatique 5 à gonfler, sur la base de la valeur de la température du pneumatique 5 mesurée par le capteur de température 20 et sur la base de la température ambiante instantanée mesurée par le capteur de température 37 ou sur la base de la température ambiante moyenne calculée comme indiquée plus haut par le microprocesseur 17. Ce dernier calcule ladite valeur de consigne corrigée $P_{cc}$ d'après la formule (1)

$$P_{cc} = P_c \cdot \frac{T_p}{T_{ref}}$$

dans laquelle $P_c$ est la valeur de consigne de la pression déterminée comme décrit précédemment, $T_p$ est la température du pneumatique 5 mesurée par le capteur de température 20 et $T_{ref}$ est une température variable de référence. Cette température variable de référence $T_{ref}$ est choisie comme étant la température la plus basse parmi la température ambiante instantanée mesurée par le capteur de température 37 et la valeur moyenne de la température ambiante calculée par le microprocesseur 17. Dans la formule (1) susindiquée, les deux températures $T_p$ et $T_{ref}$ sont des températures absolues exprimées en degré K (degré Kelvin) .

Une fois que la valeur de consigne corrigée $P_{cc}$ pour la pression de gonflage de la roue 3 a été ainsi calculée, elle est stockée dans une mémoire approprié du microprocesseur 17 et le programme lance alors l'opération de gonflage proprement dite.

Le microprocesseur 17 commence par vérifier si la valeur réelle de la pression dans la cavité du pneumatique 5, mesurée par le capteur de pression 35 (ou éventuellement par le capteur de pression 16 s'il est prévu), est inférieure à la valeur de consigne corrigée et calculée $P_{cc}$ ou si elle est supérieure à ladite valeur de consigne corrigée calculée. Si le pneumatique 5 est sous-gonflé, le microprocesseur 17 commande alors, par l'intermédiaire d'un circuit de commande de puissance (non montré), l'ouverture de l'électrovalve 26 afin de gonfler le pneumatique 5. L'opération de gonflage se poursuit jusqu'au moment où la valeur réelle de la pression mesurée par le capteur de pression 35 (ou 16) atteint la valeur de consigne corrigée calculée. A ce moment, le microprocesseur 17 provoque la fermeture de l'électrovalve 26 et l'émission d'un signal sonore et/ou lumineux avertissant l'utilisateur de la machine de gonflage 2 que l'opération de gonflage du pneumatique est terminée. Le microprocesseur peut aussi provoquer l'affichage d'un message "fin de gonflage" sur l'écran de l'afficheur 36.

Inversement, si le pneumatique 5 est trop gonflé, le microprocesseur 17 commande alors, par l'intermédiaire d'un autre circuit de commande de puissance (non montré), l'ouverture de l'électrovalve 27 afin de dégonfler le pneumatique 5. L'opération de dégonflage se poursuit jusqu'au moment où la valeur réelle de la pression mesurée par le capteur de pression 35 (ou 16) atteint la valeur de consigne corrigée calculée. A ce moment, le microprocesseur provoque la fermeture de l'électrovalve 27 et l'émission du signal sonore et/ou lumineux susmentionné et/ou l'affichage du message "fin de gonflage".

Si le pneumatique était très dégonflé, il se peut qu'il faille injecter dans le pneumatique une quantité d'air relativement importante. Dans ce cas, si la température de l'air injecté dans le pneumatique a une valeur sensiblement différente de celle l'air qui se trouvait déjà dans la cavité du pneumatique, il peut en résulter une modification notable de la valeur de la température Tp du pneumatique.

Par conséquent, dans une version plus sophistiquée du procédé de gonflage selon l'invention, le microprocesseur 17 de la machine de gonflage peut être programmé pour interroger à nouveau, après l'opération de gonflage décrite ci-dessus, le support d'information 7 ou 8 qui porte le capteur de température 20, afin d'acquérir la nouvelle valeur de la température du pneumatique après la première opération de gonflage. Si la nouvelle valeur de la température $T_p$ a changé de plus d'une quantité prédéfinie, par exemple de plus de 5°C en plus ou en moins par rapport à la valeur de la température initialement acquise avant l'opération de gonflage, le programme contenu dans la mémoire du microprocesseur 17 commande alors à celui-ci de recalculer une nouvelle valeur de consigne corrigée, selon la formule (1) indiquée plus haut, en utilisant les valeurs précédemment déterminées ou calculées pour $P_c$ et pour $T_{ref}$ et en utilisant la nouvelle valeur acquise pour la température Tp. Ensuite, le microprocesseur 17 commande la machine de gonflage 2 de façon à gonfler ou dégonfler le pneumatique 5 pour amener la pression réelle, mesurée par le capteur de pression 35 (ou 16) à la nouvelle valeur de consigne corrigée recalculée.

Dans la formule (1) indiquée plus haut donnant la valeur de la pression de consigne corrigée, les deux pressions $P_{cc}$ et $P_c$ sont en valeur absolue et les températures Tp et $T_{ref}$ sont en degré K. La formule (1) susindiquée peut encore être écrite comme la formule (2) suivante :

$$P'_{cc} = (P'_c + P_{atm}) . \left[ (t_p + 273) / (t_{ref} + 273) \right] - P_{atm}$$

dans laquelle $P'_c$ et $P'_{cc}$ sont respectivement la valeur de consigne et la valeur de consigne corrigée, exprimées en valeur relative, $P_{atm}$ est la valeur de la pression atmosphérique, Tp et $T_{ref}$ sont la température du pneumatique et la température variable de référence exprimées en degré C.

On voit donc que la valeur de la pression de consigne corrigée $P'_{cc}$ dépend de la valeur de la pression atmosphérique. Comme la pression atmosphérique peut varier substantiellement non seulement sur un même site, mais également d'un site à l'autre (la pression atmosphérique a une valeur qui dépend notamment de l'altitude par rapport au niveau de la mer), le procédé de gonflage selon l'invention peut être adapté pour tenir compte de la valeur de la pression atmosphérique régnant sur le site de gonflage.

Dans ce cas, comme montré dans la figure 1, la machine 2 peut en outre comporter un capteur de pression atmosphérique ou baromètre 38 apte à fournir au microprocesseur 17 un signal indicatif de la valeur de la pression atmosphérique régnant sur le site de la machine de gonflage 2. Le microprocesseur 17 peut être alors programmé pour calculer la valeur de consigne corrigée $P'_{cc}$, en valeur relative, d'après la formule (2) indiquée plus haut. Naturellement, dans ce cas, les capteurs de température 20 et 37 doivent être étalonnés en degré C ou, s'ils sont étalonnés en degré K, le microprocesseur doit être programmé pour effectuer la conversion des degrés K en degré C avant d'effectuer le calcul selon la formule (2) .

Il peut arriver que le capteur de pression 35 qui fournit au microprocesseur 17 la valeur réelle de la pression de l'air dans la cavité du pneumatique 5 soit défaillant, ou que ce capteur 35 fournisse une valeur de pression décalée vers le haut, comme cela arrive parfois avec le type de capteur (tube de Bourdon) utilisé dans les machines de gonflage en libre service. Dans ces conditions, les pneumatiques gonflés avec une machine de gonflage comportant un capteur de pression 35 donnant des valeurs de pression décalées vers le haut seront systématiquement sous-gonflés.

Afin d'éviter cela, le microprocesseur 17 peut être programmé pour effectuer un auto-diagnostic lorsque la roue équipée du pneumatique à gonfler comporte un support d'information 7, 8 ou 9 portant un capteur de pression comme le capteur de pression 16 de la figure 4. En effet, ce capteur de pression peut être plus précis que le capteur 35. Dans ce cas, le microprocesseur 17, qui reçoit d'une part la valeur de la pression mesurée par le capteur 35 et d'autre part la valeur de la pression mesurée par le capteur 16, peut être programmé pour comparer les deux valeurs de pression et pour fournir un signal d'erreur si les deux valeurs diffèrent de plus d'une quantité prédéfinie, par exemple de plus 50 millibars. Bien entendu, cette valeur est donnée à titre purement indicatif car elle peut être plus grande ou plus faible si on le désire. Les signaux d'erreur ainsi produits par le microprocesseur sont comptés dans un compteur approprié au cours des opérations de gonflage effectuées par la machine de gonflage 2 et le contenu du compteur est comparé à chaque fois à un nombre prédéfini, par exemple 4 ou un multiple de 4, c'est-à-dire un multiple du nombre usuel des roues d'un véhicule automobile. Dans ces conditions, le microprocesseur peut être programmé pour émettre un message d'erreur et pour afficher ce message d'erreur sur l'écran de l'afficheur 36 si le nombre de signaux d'erreur comptés atteint le nombre prédéfini, et pour mettre la machine de gonflage 2 hors service.

Il est bien entendu que les modes de réalisation de l'invention qui ont été décrits ci-dessus ont été donnés à titre d'exemples purement indicatif et nullement limitatif et que de nombreuses modifications peuvent être facilement apportées par l'homme de l'art sans pour autant sortir du cadre de l'invention.

## Revendications

1. Procédé pour gonfler un pneumatique (5) d'une roue (3) de véhicule à l'aide d'une machine de gonflage (2) commandée par une unité programmable de gestion de données (17), ledit procédé consistant :

   a) à utiliser une roue (3) pour laquelle au moins un des composants (4, 5 et 6) de la roue (3) est muni d'un support d'information (7, 8, 9) portant un capteur de température (20) apte à fournir la valeur de la température du pneumatique (5) de la roue, ledit support d'information (7, 8, 9) étant consultable automatiquement et apte à fournir, quand il est consulté, au moins une donnée (Tp) utilisable pour gonfler le pneumatique,
   b) à consulter automatiquement ledit support d'information (7, 8 ou 9) et à transmettre automatiquement à ladite unité programmable de gestion de données (17) au moins la valeur de la température ($T_p$) du pneumatique (5) fournie par le capteur de température (20),
   c) à fournir à l'unité programmable de gestion de données (17) au moins une donnée permettant de définir une valeur de consigne ($P_c$) pour la pression de gonflage du pneumatique (5),
   d) à mesurer la valeur de la pression de l'air à l'intérieur du pneumatique (5),
   e) à ajuster, par gonflage ou dégonflage, la valeur de la pression de l'air à l'intérieur du pneumatique
   **caractérisé par** les étapes consistant :
   f) à mesurer la température ambiante sur le site de la machine de gonflage (2),
   g) à calculer une valeur moyenne de ladite température ambiante sur une période de temps écoulée prédéfinie,
   h) à calculer, sur la base de ladite valeur de consigne ($P_c$) pour la pression de gonflage, une valeur de consigne corrigée ($P_{cc}$) tenant compte de la valeur de la température ($T_p$) du pneumatique (5) fournie par le capteur de température (20), la valeur de consigne corrigée $P_{cc}$ étant calculée d'après la formule

$$P_{cc} \approx P_c \cdot \frac{T_p}{T_{ref}}$$

   dans laquelle $P_c$ est ladite valeur de consigne pour la pression de gonflage, $T_p$ est la température du pneumatique (5) fournie par le capteur de température (20), et $T_{ref}$ est une température variable de référence qui est choisie comme étant la température la plus basse parmi la température ambiante instantanée mesurée sur le site de la machine de gonflage (2) et ladite valeur moyenne calculée de la température ambiante, les pressions $P_c$ et $P_{cc}$ étant en valeur absolue et les températures $T_p$ et $T_{ref}$ étant en degré K,
   dans lequel, à l'étape e), la valeur de la pression de l'air à l'intérieur du pneumatique est ajustée à la valeur de consigne corrigée calculée ($P_{cc}$)

**2.** Procédé selon la revendication 1, **caractérisé par le fait que**, à l'étape g), la valeur moyenne de la température ambiante est calculée sur une période de 24 heures.

**3.** Procédé selon la revendication 1, **caractérisé par le fait que**, à l'étape g), la valeur moyenne de la température ambiante est calculée sur une période de 12 heures.

**4.** Procédé selon l'une quelconque des revendications 1 à 3, **caractérisé par le fait que**, à l'étape c), ladite au moins une donnée permettant de définir une valeur de consigne ($P_c$) pour la pression de gonflage est fournie automatiquement par la consultation automatique dudit support d'information (7, 8 ou 9) effectuée à l'étape b).

**5.** Procédé selon l'une quelconque des revendications 1 à 4, **caractérisé par le fait que**, à l'étape c), ladite au moins une donnée permettant de définir une valeur de consigne ($P_c$) pour la pression de gonflage est fournie par un utilisateur de la machine de gonflage (2) par entrée de ladite au moins une donnée au moyen d'un clavier (30).

**6.** Procédé selon l'une quelconque des revendications 1 à 5, **caractérisé en outre par** l'étape consistant :

i) à mesurer la pression atmosphérique sur le site de la machine de gonflage (2),
et par le fait que, à l'étape h), la valeur de consigne corrigée P'$_{cc}$, en valeur relative, est calculée d'après la formule :

$$ P'_{cc} = (P'_c + P_{atm}) . \left[ (t_p + 273) / (t_{ref} + 273) \right] - P_{atm} $$

dans laquelle P'$_c$ est ladite valeur de consigne, en valeur relative, pour la pression de gonflage, $P_{atm}$ est la valeur de la pression atmosphérique mesurée, $t_p$ et $t_{ref}$ sont ladite température du pneumatique et ladite température variable de référence en degré C.

**7.** Procédé selon l'une quelconque des revendications 1 à 6, **caractérisé en outre par** l'étape consistant :

j) à fournir à l'unité programmable de gestion de données (17) au moins une information supplémentaire choisie dans le groupe comprenant une information indiquant le modèle du véhicule (V) auquel appartient la roue (3) dont le pneumatique (5) est à gonfler, une information indiquant si ledit pneumatique (5) à gonfler appartient à un essieu avant ou arrière, une information indiquant un état de charge du véhicule (V) et une information indiquant sur quel type de voie l'utilisateur à l'intention de rouler, et par le fait que, ladite au moins une information supplémentaire est prise en compte, en combinaison avec ladite donnée fournie à l'étape c), pour définir la valeur de consigne ($P_c$) pour la pression de gonflage à utiliser pour le calcul de la valeur de consigne corrigée ($P_{cc}$).

**8.** Procédé selon l'une quelconque des revendication 1 à 7, **caractérisé par le fait que**, après l'étape e), sont prévues en outre les étapes consistant :

k) à répéter l'étape b),
l) à vérifier si la température (Tp) du pneumatique (5) fournie par le capteur de température (20) à l'étape k) a changé de plus d'une quantité prédéfinie par rapport à la température du pneumatique fournie par le capteur de température à l'étape b),
m) si le résultat de la vérification effectuée à l'étape l) est positif, à répéter les étapes h), d) et e) h), en utilisant dans la formule de calcul de la valeur de consigne corrigée la valeur de la température du pneumatique fournie par le capteur de température à l'étape k), sinon à émettre un message de fin de gonflage.

**9.** Procédé selon l'une quelconque des revendications 1 à 8, **caractérisé en ce que**, à l'étape d), la valeur de la pression à l'intérieur du pneumatique (5) est mesurée par un premier capteur de pression (35) situé dans la machine de gonflage.

**10.** Procédé selon la revendication 9, dans lequel le support d'information (7, 8 ou 9) porte un second capteur de pression (16) apte à fournir la valeur de la pression de l'air à l'intérieur du pneumatique (5), **caractérisé par le fait que**,

- à l'étape b), la valeur de la pression fournie par le second capteur de pression (16) est aussi transmise à l'unité programmable de gestion de données (17),
- à l'étape d) la valeur de la pression de l'air à l'intérieur du pneumatique (5), mesurée par le premier capteur de pression (35), est comparée à la valeur de la pression fournie par le second capteur de pression (16) et un signal d'erreur est produit et compté si les valeurs de pression fournies par les premier et second capteurs diffèrent de plus d'une quantité prédéfinie.

11. Procédé selon la revendication 10, **caractérisé par** le fait qu'un message d'erreur est émis si le nombre des signaux d'erreurs comptés atteint un nombre prédéfini au cours d'opérations successives de gonflage, et la machine de gonflage (3) est mise hors service.

12. Machine de gonflage pour des roues de véhicule ayant au moins un composant (4, 5 ou 6) qui est muni d'un support d'information (7, 8 ou 9) portant un premier capteur de température (20) apte à fournir la valeur de la température du pneumatique (5) de la roue (3) correspondante, ledit support d'information (7, 8 ou 9) étant consultable automatiquement et apte à fournir, quand il est consulté, au moins une donnée ($T_p$) utilisable pour gonfler le pneumatique (5), ladite machine (2) comprenant :

a) un moyen de consultation et de transmission (19) apte à consulter automatiquement ledit support d'information (7, 8 ou 9) et à transmettre automatiquement ladite au moins une donnée à une unité programmable de gestion de données (17),
b) ladite unité programmable de gestion de données (17),
c) un capteur de pression (35) apte à mesurer la valeur de la pression de l'air à l'intérieur dudit pneumatique (5) à gonfler et pour fournir la valeur de la pression mesurée à ladite unité programmable de gestion de données (17),
d) des moyens de gonflage (24-29) commandés par ladite unité programmable de gestion de données (17) pour ajuster la valeur de la pression de l'air à l'intérieur du pneumatique (5)
**caractérisée par**:
e) un second capteur de température (37) pour mesurer la température ambiante sur le site de la machine de gonflage (2),
f) des moyens de calcul inclus dans ladite unité programmable de gestion de données (17) pour calculer une valeur de consigne corrigée ($P_{cc}$) pour la pression de gonflage du pneumatique (5) à gonfler, sur la base d'une valeur de consigne ($P_c$) pour la pression de gonflage définie à partir d'au moins une donnée fournie à ladite unité programmable de gestion de données (17), et tenant compte de la valeur de la température ($T_p$) du pneumatique fournie par le premier capteur de température (20), l'unité programmable de gestion de donnée (17) étant programmée pour que lesdits moyens de calcul calculent une valeur moyenne de ladite température ambiante sur une période de temps écoulée prédéfinie, et calculent la valeur de consigne corrigée $P_{cc}$ d'après la formule :

$$P_{cc} = P_c \cdot \frac{T_p}{T_{ref}}$$

dans laquelle $P_c$ est ladite valeur de consigne pour la pression de gonflage, $T_p$ est la température du pneumatique (5) fournie par le premier capteur de température (20) et $T_{ref}$ est une température variable de référence qui est choisie comme étant la température la plus basse parmi la température ambiante instantanée mesurée sur le site de la machine de gonflage (2) par le second capteur de température (37) et ladite valeur moyenne calculée de la température ambiante, les pressions $P_c$ et $P_{cc}$ étant en valeur absolue et les températures $T_p$ et $T_{ref}$ étant en degré K, dans laquelle les moyens de gonflage (24-29) sont commandés par ladite unité programmable de gestion de données (17) pour ajuster la valeur de la pression de l'air à l'intérieure du pneumatique (5) à la valeur de consigne corrigée ($P_{cc}$) calculée par lesdits moyens de calcul.

13. Machine de gonflage selon la revendication 12, **caractérisée par le fait que** l'unité programmable de gestion de données (17) comporte une mémoire (18) contenant une table de correspondance comprenant les données d'identification de tous les pneumatiques susceptibles d'être gonflés au moyen de la machine de gonflage (2) et, pour chaque donnée d'identification, plusieurs valeurs de consigne pour la pression de gonflage qui dépendent elles-mêmes d'au moins une information supplémentaire choisie dans le groupe comprenant une information indiquant le modèle de véhicule (V) auquel appartient la roue (3) dont le pneumatique (5) est à gonfler, une information indiquant si ledit pneumatique (5) appartient à un essieu avant ou arrière, une information indiquant un état de charge du véhicule (V) et une information indiquant sur quel type de voie l'utilisateur à l'intention de rouler.

**14.** Machine de gonflage selon la revendication 13, **caractérisée par** un clavier (30) pour entrer ladite au moins une information supplémentaire dans ladite unité programmable de gestion de données (17), et par le fait que ladite unité programmable de gestion de données (17) est programmée pour sélectionner comme valeur de consigne ($P_c$) dans la table de correspondance la valeur de consigne correspondant à ladite donnée d'identification et à ladite au moins une information supplémentaire entrée au moyen du clavier (30).

**15.** Machine de gonflage selon l'une quelconque des revendications 12 à 14, **caractérisée par le fait qu'**elle comprend, à titre dudit moyen pour mesurer la valeur de la pression de l'air à l'intérieur du pneumatique (5), un premier capteur de pression (35) qui est situé dans la machine de gonflage (2) et qui est en communication, du point de vue fluidique, avec ledit pneumatique (5) quand la machine de gonflage est raccordée à une valve de gonflage (10) de la roue (3).

**16.** Machine de gonflage selon la revendication 15, **caractérisée par le fait que** l'unité programmable de gestion de données (17) est programmée pour comparer les valeurs de pression fournies par les premier et second capteurs de pression (35, 16) et pour produire et compter un signal d'erreur si lesdites valeurs de pression diffèrent de plus d'une quantité prédéfinie.

**17.** Machine de gonflage selon la revendication 16, **caractérisée par le fait que** l'unité programmable de gestion de données (17) est programmée pour émettre un message d'erreur si le nombre des signaux d'erreur comptés au cours d'opérations successives de gonflage atteint un nombre prédéfini, et pour mettre la machine de gonflage (2) hors service.

**18.** Machine de gonflage selon l'une quelconque des revendications 12 à 17, **caractérisée par le fait qu'**elle comprend un troisième capteur de pression (38) installé pour mesurer la pression atmosphérique sur le site de la machine de gonflage (2), et **par le fait que** l'unité programmable de gestion de données (17) est programmée pour calculer la valeur de consigne corrigée $P'_{cc}$, en valeur relative, d'après la formule :

$$P'_{cc} = (P'_c + P_{atm}).\left[(t_p + 273)/(t_{ref} + 273)\right] - P_{atm}$$

dans laquelle $P'_c$ est ladite valeur de consigne, en valeur relative, pour la pression de gonflage, $P_{atm}$ est la valeur de la pression atmosphérique mesurée par le troisième capteur de pression (38), $T_p$ et $T_{ref}$ sont respectivement ladite température du pneumatique et ladite température variable de référence en degré C.

**Claims**

**1.** A process for inflating a tyre (5) of a vehicle wheel (3) using an inflation machine (2) controlled by a programmable data management unit (17), said process consisting of:

a) using a wheel (3) for which at least one of the components (4, 5 and 6) of the wheel (3) is provided with a data recording medium (7, 8, 9) bearing a temperature sensor (20) capable of providing the value of the temperature of the tyre (5) of the wheel, said data recording medium (7, 8, 9) being consultable automatically and capable of providing, when consulted, at least one data item ($T_p$) usable for inflating the tyre,
b) automatically consulting said data recording medium (7, 8 or 9) and automatically transmitting to said programmable data management unit (17) at least the value of the temperature ($T_p$) of the tyre (5) which is provided by the temperature sensor (20),
c) providing the programmable data management unit (17) with at least one data item which makes it possible to define a set value ($P_c$) for the inflation pressure of the tyre (5),
d) measuring the value of the pressure of the air within the tyre (5),
e) adjusting, by inflation or deflation, the value of the pressure of the air within the tyre,
**characterised by** the steps consisting of:
f) measuring the ambient temperature on the site of the inflation machine (2),
g) calculating an average value of said ambient temperature over a predefined period of time which has elapsed,
h) calculating, on the basis of said set value ($P_c$) for the inflation pressure, a corrected set value ($P_{cc}$) taking into account the value of the temperature ($T_p$) of the tyre (5) provided by the temperature sensor (20), the corrected set value $P_{cc}$ being calculated in accordance with the formula

$$P_{cc} = P_c \cdot \frac{T_p}{T_{ref}}$$

in which $P_c$ is said set value for the inflation pressure, $T_p$ is the temperature of the tyre (5) which is provided by the temperature sensor (20), and $T_{ref}$ is a variable reference temperature which is selected as being the lowest temperature of the instantaneous ambient temperature measured on the site of the inflation machine (2) and said calculated average value of the ambient temperature, the pressures $P_c$ and $P_{cc}$ being in absolute value and the temperatures $T_p$ and $T_{ref}$ being in degrees K,
in which, in step e),
the value of the pressure of the air within the tyre is adjusted to the calculated corrected set value ($P_{cc}$).

2. A process according to Claim 1, **characterised by** the fact that, in step g), the average value of the ambient temperature is calculated over a period of 24 hours.

3. A process according to Claim 1, **characterised by** the fact that, in step g), the average value of the ambient temperature is calculated over a period of 12 hours.

4. A process according to any one of Claims 1 to 3, **characterised by** the fact that, in step c), said at least one data item enabling a set value ($P_c$) for the inflation pressure to be defined is provided automatically by the automatic consultation of said data recording medium (7, 8 or 9) carried out in step b).

5. A process according to any one of Claims 1 to 4, **characterised by** the fact that, in step c), said at least one data item enabling a set value ($P_c$) for the inflation pressure to be defined is provided by a user of the inflation machine (2) by entering said at least one data item by means of a keyboard (30).

6. A process according to any one of Claims 1 to 5, furthermore **characterised by** the step consisting of:

   i) measuring the atmospheric pressure on the site of the inflation machine (2), and by the fact that, in step h), the corrected set value P'$_{cc}$, in relative value, is calculated in accordance with the formula:

$$P'_{cc} = (P'_c + P_{atm}).[(t_p + 273)/(t_{ref} + 273)] - P_{atm}$$

   in which P'$_c$ is said set value, in relative value, for the inflation pressure, $P_{atm}$ is the value of the measured atmospheric pressure, $t_p$ and $t_{ref}$ are said temperature of the tyre and said variable reference temperature in degrees C.

7. A process according to any one of Claims 1 to 6, furthermore **characterised by** the step consisting of:

   j) providing the programmable data management unit (17) with at least one additional item of information selected from the group comprising information indicating the model of the vehicle (V) to which the wheel (3) the tyre (5) of which is to be inflated belongs, information indicating whether said tyre (5) which is to be inflated belongs to a front or rear axle, information indicating a load condition of the vehicle (V) and information indicating on what type of road the user intends to travel,

   and by the fact that said at least one additional item of information is taken into account, in combination with said data item provided in step c), to define the set value ($P_c$) for the inflation pressure to be used for calculating the corrected set value ($P_{cc}$).

8. A process according to any one of Claims 1 to 7, **characterised by** the fact that, after step e), there are furthermore provided the steps consisting of:

k) repeating step b),

l) checking whether the temperature ($T_p$) of the tyre (5) provided by the temperature sensor (20) in step k) has changed by more than a predefined quantity relative to the temperature of the tyre provided by the temperature sensor in step b),

m) if the result of the check carried out in step 1) is positive, repeating steps h), d) and e) h), using in the formula for calculating the corrected set value the value of the temperature of the tyre provided by the temperature sensor in step k), if not, emitting an "inflation end" message.

9.  A process according to any one of Claims 1 to 8, **characterised in that**, in step d), the value of the pressure within the tyre (5) is measured by a first pressure sensor (35) located in the inflation machine.

10.  A process according to Claim 9, in which the data recording medium (7, 8 or 9) bears a second pressure sensor (16) capable of providing the value of the pressure of the air within the tyre (5), **characterised by** the fact that

    - in step b), the value of the pressure provided by the second pressure sensor (16) is also transmitted to the programmable data management unit (17),
    - in step d) the value of the pressure of the air within the tyre (5), measured by the first pressure sensor (35), is compared with the value of the pressure provided by the second pressure sensor (16) and an error signal is produced and counted if the pressure values provided by the first and second sensors differ by more than a predefined quantity.

11.  A process according to Claim 10, **characterised by** the fact that an error message is emitted if the number of error signals counted reaches a predefined number during successive inflation operations, and the inflation machine (3) is deactivated.

12.  An inflation machine for vehicle wheels having at least one component (4, 5 or 6) which is provided with a data recording medium (7, 8 or 9) bearing a first temperature sensor (20) capable of providing the value of the temperature of the tyre (5) of the corresponding wheel (3), said data recording medium (7, 8 or 9) being consultable automatically and capable of providing, when consulted, at least one data item ($T_p$) usable for inflating the tyre (5), said machine (2) comprising:

    a) a consultation and transmission means (19) capable of automatically consulting said data recording medium (7, 8 or 9) and automatically transmitting said at least one data item to a programmable data management unit (17),
    b) said programmable data management unit (17),
    c) a pressure sensor (35) capable of measuring the value of the pressure of the air within said tyre (5) which is to be inflated and for providing the value of the pressure measured to said programmable data management unit (17),
    d) inflation means (24-29) controlled by said programmable data management unit (17) for adjusting the value of the pressure of the air within the tyre (5),
    **characterised by**:
    e) a second temperature sensor (37) for measuring the ambient temperature on the site of the inflation machine (2),
    f) calculation means included in said programmable data management unit (17) for calculating a corrected set value ($P_{cc}$) for the inflation pressure of the tyre (5) which is to be inflated, on the basis of a set value ($P_c$) for the inflation pressure defined from at least one data item provided to said programmable data management unit (17), and taking into account the value of the temperature ($T_p$) of the tyre provided by the first temperature sensor (20), the programmable data management unit (17) being programmed so that said calculation means calculate an average value of said ambient temperature over a predefined period of time which has elapsed, and calculate the corrected set value $P_{cc}$ in accordance with the formula:

$$P_{cc} = P_c \cdot \frac{T_p}{T_{ref}}$$

in which $P_c$ is said set value for the inflation pressure, $T_p$ is the temperature of the tyre (5) which is provided by the first temperature sensor (20), and $T_{ref}$ is a variable reference temperature which is selected as being the lowest temperature of the instantaneous ambient temperature measured on the site of the inflation machine (2) by the second temperature sensor (37) and said calculated average value of the ambient temperature, the pressures $P_c$ and $P_{cc}$ being in absolute value and the temperatures $T_p$ and $T_{ref}$ being in degrees K,

in which the inflation means (24-29) are controlled by said programmable data management unit (17) to adjust the value of the pressure of the air within the tyre (5) to the corrected set value ($P_{cc}$) calculated by said calculation means.

13. An inflation machine according to Claim 12, **characterised by** the fact that the programmable data management unit (17) comprises a memory (18) containing a look-up table comprising the data identifying all the tyres capable of being inflated by means of the inflation machine (2) and, for each identification data item, a plurality of set values for the inflation pressure which themselves depend on at least one additional item of information selected from the group comprising information indicating the model of the vehicle (V) to which the wheel (3) the tyre (5) of which is to be inflated belongs, information indicating whether said tyre (5) belongs to a front or rear axle, information indicating a load condition of the vehicle (V) and information indicating on what type of road the user intends to travel.

14. An inflation machine according to Claim 13, **characterised by** a keyboard (30) for entering said at least one additional item of information into said programmable data management unit (17), and by the fact that said programmable data management unit (17) is programmed to select as set value ($P_c$) in the look-up table the set value corresponding to said identification data item and to said at least one additional item of information entered by means of the keyboard (30).

15. An inflation machine according to any one of Claims 12 to 14, **characterised by** the fact that it comprises, as said means for measuring the value of the pressure of the air within the tyre (5), a first pressure sensor (35) which is located in the inflation machine (2) and which communicates, from the fluid point of view, with said tyre (5) when the inflation machine is connected to an inflation valve (10) of the wheel (3).

16. An inflation machine according to Claim 15, **characterised by** the fact that the programmable data management unit (17) is programmed to compare the pressure values provided by the first and second pressure sensors (35, 16) and to produce and count an error signal if said pressure values differ by more than a predefined quantity.

17. An inflation machine according to Claim 16, **characterised by** the fact that the programmable data management unit (17) is programmed to emit an error message if the number of error signals counted during successive inflation operations reaches a predefined number, and to deactivate the inflation machine (2).

18. An inflation machine according to any one of Claims 12 to 17, **characterised by** the fact that it comprises a third pressure sensor (38) installed for measuring the atmospheric pressure on the site of the inflation machine (2), and by the fact that the programmable data management unit (17) is programmed to calculate the corrected set value $P'_{cc}$, in relative value, in accordance with the formula:

$$P'_{cc} = (P'_c + P_{atm}).[(t_p + 273)/(t_{ref} + 273)] - P_{atm}$$

in which $P'_c$ is said set value, in relative value, for the inflation pressure, $P_{atm}$ is the value of the atmospheric pressure measured by the third pressure sensor (38), $T_p$ and $T_{ref}$ are respectively said temperature of the tyre and said variable reference temperature in degrees C.

**Patentansprüche**

1. Verfahren zum Aufpumpen bzw. Füllen eines Reifens (5) eines Fahrzeugrads (3) mithilfe eines Füllgeräts (2), das von einer programmierbaren Datenverwaltungseinheit (17) gesteuert wird, wobei das Verfahren besteht im:

a) Verwenden eines Rads (3), für das zumindest eines der Bestandteile (4, 5 und 6) des Rads (3) mit einem Informationsträger (7, 8, 9) ausgestattet ist, der einen Temperatursensor (20) trägt, der sich eignet, um den Wert der Temperatur des Reifens (5) des Rads zu liefern, wobei der Informationsträger (7, 8, 9) automatisch abfragbar und in der Lage ist, wenn er abgefragt wird, zumindest eine Angabe ($T_p$) zu liefern, die zum Aufpumpen des Reifens nutzbar ist,

b) automatischen Abfragen des Informationsträgers (7, 8 oder 9) und automatischen Übermitteln zumindest des vom Temperatursensor (20) gelieferten Werts der Temperatur ($T_p$) des Reifens (5) an die programmierbare Datenverwaltungseinheit (17),

c) Liefern zumindest einer Angabe, die das Festlegen eines Sollwerts ($P_C$) für den Fülldruck des Reifens (5) ermöglicht, an die programmierbare Datenverwaltungseinheit (17),

d) Messen des Werts des Drucks der Luft im Innern des Reifens (5),

e) Regeln, durch Aufpumpen oder Ablassen, des Werts des Drucks der Luft im Innern des Reifens,

**gekennzeichnet durch** die Schritte, die bestehen im:

f) Messen der Umgebungstemperatur am Ort des Füllgeräts (2),

g) Berechnen eines Durchschnittswerts der Umgebungstemperatur über einen vorbestimmten verstrichenen Zeitraum,

h) Berechnen, auf Grundlage des Sollwerts ($P_C$) für den Fülldruck, eines korrigierten Sollwerts ($P_{cc}$), der den Wert der Temperatur ($T_p$) des Reifens (5) berücksichtigt, der vom Temperatursensor (20) geliefert wird, wobei der korrigierte Sollwert $P_{cc}$ berechnet wird nach der Formel

$$P_{cc} = P_c \cdot \frac{T_p}{T_{ref}}.$$

worin $P_c$ für den Sollwert für den Fülldruck steht, $T_p$ für die vom Temperatursensor (20) gelieferte Temperatur des Reifens (5) steht und $T_{ref}$ für eine variable Referenztemperatur steht, die ausgewählt ist als die Temperatur, welche die niedrigste ist unter der momentanen Umgebungstemperatur, gemessen am Ort des Füllgeräts (2), und dem berechneten Durchschnittswert der Umgebungstemperatur, wobei die Drücke $P_c$ und $P_{cc}$ als absolute Werte angegeben sind und die Temperaturen $T_p$ und $T_{ref}$ in Grad Kelvin angegeben sind,

wobei, in Schritt e), der Wert des Drucks der Luft im Innern des Reifens dem berechneten korrigierten Sollwert ($P_{cc}$) angeglichen wird.

2. Verfahren nach Anspruch 1, **dadurch gekennzeichnet, dass**, in Schritt g), der Durchschnittswert der Umgebungstemperatur über einen Zeitraum von vierundzwanzig Stunden berechnet wird.

3. Verfahren nach Anspruch 1, **dadurch gekennzeichnet, dass**, in Schritt g), der Durchschnittswert der Umgebungstemperatur über einen Zeitraum von zwölf Stunden berechnet wird.

4. Verfahren nach einem der Ansprüche 1 bis 3, **dadurch gekennzeichnet, dass**, in Schritt c), die zumindest eine Angabe, die das Festlegen eines Sollwerts ($P_C$) für den Fülldruck ermöglicht, automatisch geliefert wird durch die in Schritt b) durchgeführte automatische Abfrage des Informationsträgers (7, 8 oder 9).

5. Verfahren nach einem der Ansprüche 1 bis 4, **dadurch gekennzeichnet, dass**, in Schritt c), die zumindest eine Angabe, die das Festlegen eines Sollwerts ($P_C$) für den Fülldruck ermöglicht, von einem Benutzer des Füllgeräts (2) geliefert wird durch Eingabe der zumindest einen Angabe mittels einer Tastatur (30).

6. Verfahren nach einem der Ansprüche 1 bis 5, weiterhin **gekennzeichnet durch** den Schritt, der besteht im:

i) Messen des atmosphärischen Drucks am Ort des Füllgeräts (2), und **dadurch**, dass, in Schritt h), der korrigierte Sollwert $P'_{cc}$, als relativer Wert, berechnet wird nach der Formel:

$$P'_{cc} = (P'_c + P_{atm}) \cdot \left[ (t_p + 273)/(t_{ref} + 273) \right] - P_{atm}$$

worin $P'_c$ für den Sollwert, als relativen Wert, für den Fülldruck steht, $P_{atm}$ für den Wert des gemessenen atmosphärischen Drucks steht, $t_p$ und $t_{ref}$ für die Temperatur des Reifens beziehungsweise für die variable Referenztemperatur in Grad Celsius stehen.

7. Verfahren nach einem der Ansprüche 1 bis 6, weiterhin **gekennzeichnet durch** den Schritt, der besteht im:

j) Liefern, an die programmierbare Datenverwaltungseinheit (17), zumindest einer Zusatzinformation, die ausgewählt ist aus der Gruppe, die eine Information umfasst, die das Modell des Fahrzeugs (V) angibt, zu dem das Rad (3) gehört, dessen Reifen (5) aufzupumpen ist, eine Information, die angibt, ob der aufzupumpende Reifen (5) zu einer Vorder- oder Hinterachse gehört, eine Information, die einen Beladungszustand des Fahrzeugs (V) angibt, und eine Information, die angibt, über welche Art von Weg der Benutzer zu fahren beabsichtigt,

und dass die zumindest eine Zusatzinformation berücksichtigt wird, in Kombination mit der in Schritt c) gelieferten Angabe, um den Sollwert ($P_c$) für den Fülldruck festzulegen, der für die Berechnung des korrigierten Sollwerts ($P_{cc}$) zu verwenden ist.

8. Verfahren nach einem der Ansprüche 1 bis 7, **dadurch gekennzeichnet, dass**, nach Schritt e), weiterhin die Schritte vorgesehen sind, die bestehen im:

k) Wiederholen des Schritts b),
l) Überprüfen, ob sich die Temperatur ($T_p$) des Reifens (5), die vom Temperatursensor (20) in Schritt k) geliefert wird, um mehr als ein vorbestimmtes Maß in Bezug auf die Temperatur des Reifens verändert hat, die vom Temperatursensor in Schritt b) geliefert wird,
m) falls das Ergebnis der in Schritt l) durchgeführten Überprüfung positiv ist, Wiederholen der Schritte h), d) und e), wobei in der Formel zur Berechnung des korrigierten Sollwerts der Wert der Temperatur des Reifens verwendet wird, der vom Temperatursensor in Schritt k) geliefert wird, andernfalls Ausgeben einer Füllende-Meldung.

9. Verfahren nach einem der Ansprüche 1 bis 8, **dadurch gekennzeichnet, dass**, in Schritt d), der Wert des Drucks im Innern des Reifens (5) von einem ersten Drucksensor (35) gemessen wird, der sich im Füllgerät befindet.

10. Verfahren nach Anspruch 9, wobei der Informationsträger (7, 8 oder 9) einen zweiten Drucksensor (16) trägt, der in der Lage ist, den Wert des Drucks der Luft im Innern des Reifens (5) zu liefern, **dadurch gekennzeichnet, dass**

- in Schritt b) der Wert des Drucks, der vom zweiten Drucksensor (16) geliefert wird, auch an die programmierbare Datenverwaltungseinheit (17) übermittelt wird,
- in Schritt d) der Wert des Drucks der Luft im Innern des Reifens (5), gemessen vom ersten Drucksensor (35), mit dem Wert des Drucks verglichen wird, der vom zweiten Drucksensor (16) geliefert wird, und ein Fehlersignal erzeugt und gezählt wird, falls sich die vom ersten und zweiten Sensor gelieferten Druckwerte um mehr als ein vorbestimmtes Maß unterscheiden.

11. Verfahren nach Anspruch 10, **dadurch gekennzeichnet, dass** eine Fehlermeldung ausgegeben wird, falls die Anzahl der gezählten Fehlersignale eine vorbestimmte Anzahl im Verlauf aufeinanderfolgender Füllvorgänge erreicht, und das Füllgerät (2) außer Betrieb gesetzt wird.

12. Gerät zum Aufpumpen bzw. Füllen von Fahrzeugrädern, die zumindest ein Bestandteil (4, 5 oder 6) aufweisen, das mit einem Informationsträger (7, 8 oder 9) ausgestattet ist, der einen ersten Temperatursensor (20) trägt, der sich eignet, um den Wert der Temperatur des Reifens (5) des entsprechenden Rads (3) zu liefern, wobei der Informationsträger (7, 8 oder 9) automatisch abfragbar und in der Lage ist, wenn er abgefragt wird, zumindest eine Angabe ($T_p$) zu liefern, die zum Aufpumpen des Reifens (5) nutzbar ist, wobei das Gerät (2) umfasst:

a) ein Abfrage- und Sendemittel (19), das in der Lage ist, den Informationsträger (7, 8 oder 9) automatisch abzufragen und die zumindest eine Angabe an eine programmierbare Datenverwaltungseinheit (17) automatisch zu übermitteln,
b) die programmierbare Datenverwaltungseinheit (17),
c) einen Drucksensor (35), der in der Lage ist, den Wert des Drucks der Luft im Innern des aufzupumpenden Reifens (5) zu messen und der programmierbaren Datenverwaltungseinheit (17) den Wert des gemessenen Drucks zu liefern,
d) Mittel (24-29) zum Aufpumpen bzw. Füllen, die von der programmierbaren Datenverwaltungseinheit (17) gesteuert werden, um den Wert des Drucks der Luft im Innern des Reifens (5) zu regeln,
**gekennzeichnet durch**:
e) einen zweiten Temperatursensor (37), um die Umgebungstemperatur am Ort des Füllgeräts (2) zu messen,
f) in die programmierbare Datenverwaltungseinheit (17) einbezogene Berechnungsmittel, um einen korrigierten Sollwert ($P_{cc}$) für den Fülldruck des aufzupumpenden Reifens (5) zu berechnen, auf Grundlage eines Sollwerts

($P_c$) für den Fülldruck, der ausgehend von zumindest einer an die programmierbare Datenverwaltungseinheit (17) gelieferte Angabe festgelegt wird, und unter Berücksichtigung des Werts der Temperatur ($T_p$) des Reifens, der vom ersten Temperatursensor (20) geliefert wird, wobei die programmierbare Datenverwaltungseinheit (17) programmiert ist, damit die Berechnungsmittel einen Durchschnittswert der Umgebungstemperatur über einen vorbestimmten verstrichenen Zeitraum berechnen und den korrigierten Sollwert $P_{cc}$ berechnen nach der Formel:

$$P_{cc} = P_c \cdot \frac{T_p}{T_{ref}}$$

worin $P_c$ für den Sollwert für den Fülldruck steht, $T_p$ für die vom ersten Temperatursensor (20) gelieferte Temperatur des Reifens (5) steht und $T_{ref}$ für eine variable Referenztemperatur steht, die ausgewählt ist als die Temperatur, welche die niedrigste ist unter der momentanen Umgebungstemperatur, gemessen am Ort des Füllgeräts (2) vom zweiten Temperatursensor (37), und dem berechneten Durchschnittswert der Umgebungstemperatur, wobei die Drücke $P_c$ und $P_{cc}$ als absolute Werte angegeben sind und die Temperaturen $T_p$ und $T_{ref}$ in Grad Kelvin angegeben sind,
wobei die Mittel (24-29) zum Aufpumpen bzw. Füllen von der programmierbaren Datenverwaltungseinheit (17) gesteuert werden, um den Wert des Drucks der Luft im Innern des Reifens (5) dem korrigierten Sollwert ($P_{cc}$) anzugleichen, der von den Berechnungsmitteln berechnet wird.

13. Füllgerät nach Anspruch 12, **dadurch gekennzeichnet, dass** die programmierbare Datenverwaltungseinheit (17) einen Speicher (18) aufweist, der eine Entsprechungstabelle enthält, welche die Identifikationsdaten aller Reifen, die sich zum Aufpumpen mittels des Füllgeräts (2) eignen, und, für jede Identifikationsangabe, mehrere Sollwerte für den Fülldruck umfasst, die ihrerseits von zumindest einer Zusatzinformation abhängen, die ausgewählt ist aus der Gruppe, die eine Information umfasst, die das Modell des Fahrzeugs (V) angibt, zu dem das Rad (3) gehört, dessen Reifen (5) aufzupumpen ist, eine Information, die angibt, ob der Reifen (5) zu einer Vorder- oder Hinterachse gehört, eine Information, die einen Beladungszustand des Fahrzeugs (V) angibt, und eine Information, die angibt, auf welcher Art von Weg der Benutzer zu fahren beabsichtigt.

14. Füllgerät nach Anspruch 13, **gekennzeichnet durch** eine Tastatur (30) zum Eingeben der zumindest einen Zusatzinformation in die programmierbare Datenverwaltungseinheit (17), und **dadurch**, dass die programmierbare Datenverwaltungseinheit (17) programmiert ist, um als Sollwert ($P_c$) in der Entsprechungstabelle den Sollwert auszuwählen, welcher der Identifikationsangabe und der zumindest einen, mittels der Tastatur (30) eingegebenen Zusatzinformation entspricht.

15. Füllgerät nach einem der Ansprüche 12 bis 14, **dadurch gekennzeichnet, dass** dieses, als das Mittel zum Messen des Werts des Drucks der Luft im Innern des Reifens (5), einen ersten Drucksensor (35) umfasst, der sich in dem Füllgerät (2) befindet und der, unter fluidischem Gesichtspunkt, in Kommunikation mit dem Reifen (5) ist, wenn das Füllgerät an ein Füllventil (10) des Rads (3) angeschlossen ist.

16. Füllgerät nach Anspruch 15, **dadurch gekennzeichnet, dass** die programmierbare Datenverwaltungseinheit (17) programmiert ist, um die vom ersten und zweiten Drucksensor (35, 16) gelieferten Druckwerte zu vergleichen und um ein Fehlersignal zu erzeugen und zu zählen, falls sich die Druckwerte um mehr als ein vorbestimmtes Maß unterscheiden.

17. Füllgerät nach Anspruch 16, **dadurch gekennzeichnet, dass** die programmierbare Datenverwaltungseinheit (17) programmiert ist, um eine Fehlermeldung auszugeben, falls die Anzahl der im Verlauf aufeinanderfolgender Füllvorgänge gezählten Fehlersignale eine vorbestimmte Anzahl erreicht, und um das Füllgerät (2) außer Betrieb zu setzen.

18. Füllgerät nach einem der Ansprüche 12 bis 17, **dadurch gekennzeichnet, dass** dieses einen dritten Drucksensor (38) umfasst, der installiert ist, um den atmosphärischen Druck am Ort des Füllgeräts (2) zu messen, und dass die programmierbare Datenverwaltungseinheit (17) programmiert ist, um den korrigierten Sollwert $P'_{cc}$, als relativen Wert, zu berechnen nach der Formel:

$$P'_{cc} = (P'_{c} + P_{atm}) \cdot \left[(t_{p} + 273)/(t_{ref} + 273)\right] - P_{atm}$$

worin P'$_c$ für den Sollwert, als relativen Wert, für den Fülldruck steht, P$_{atm}$ für den Wert des atmosphärischen Drucks steht, gemessen vom dritten Drucksensor (38), T$_p$ und T$_{ref}$ jeweils für die Temperatur des Reifens und die variable Referenztemperatur in Grad Celsius stehen.

FIG.1

FIG.2

FIG.3

FIG.4

**EP 1 692 024 B1**

## RÉFÉRENCES CITÉES DANS LA DESCRIPTION

**Documents brevets cités dans la description**

- WO 0234551 A
- WO 0234552 A
- WO 0234553 A
- EP 0791488 A